# EUROPEAN PATENT APPLICATION

(11) **EP 2 094 002 A2**
(43) Date of publication of application: **26.08.2009**
(21) Application number: 09002520.6
(22) Date of filing: 23.02.2009
(51) Int. Cl.: H04N 5/232

(54) **Electronic communication system and endoscope system**

(30) Priority: 25.02.2008 JP 2008042885
(71) Applicant: FUJIFILM Corporation, Minato-ku Tokyo (JP)
(72) Inventor: Nakamura, Kazuhiko c/o Fujinon Corporation, Saitama-shi Saitama (JP)
(74) Representative: Vierheilig, Achim

(57) **Abstract**

An external control device (91) includes a reference clock generating circuit (72) for generating a reference clock (BLCK), a CPU (70) for generating, control data (CTLD), and a signal superimposing circuit (74) for serially transmitting an external clock signal (ECLK), composed of the reference clock signal (BLCK) and the control data (CTLD) superimposed thereon, to an electronic device (90) through a signal line (92) . The electronic device (90) includes a PLL circuit (78) for generating an internal clock signal (ICLK) synchronized with a frequency of the external clock signal (ECLK) serially transmitted from the external control device (91), and a control data extracting circuit (93) for extracting the control data (CTLD) from the external clock signal (ECLK) based on the internal clock signal (ICLK).

## Description

### FIELD OF THE INVENTION

The present invention relates to an electronic communication system and an endoscope system having an electronic device, such as an imaging device, and an external device interconnected with a signal line.

### BACKGROUND OF THE INVENTION

Solid-state imaging elements, such as CCD (Charge Coupled Device) image sensors and CMOS (Complementary Metal Oxide Semiconductor) image sensors are more and more miniaturized, and this miniaturization has an effect on a medical endoscope system. The endoscope system is a type of electronic communication system made up of an endoscope and an external device (processor unit) interconnected through one or more signal lines. The endoscope is equipped with an imaging devise having a solid-state imaging element, and inserted into a patient's body cavity to capture an image of an internal body site. As well as controlling this imaging device, the processor unit controls displays the image transmitted from the imaging device on a monitor.

Unlike the CCD image sensor, the CMOS image sensor can be integrated into a single semiconductor chip (system-on-chip, or SoC) with a peripheral circuit which controls the solid-state imaging element and applies signal processing. This SoC integration enables a single-chip imaging device to apply necessary processing to an imaging signal and generate it as a video signal in a suitable format for the monitor connected to the external device.

The imaging device having the CMOS image sensor applies various signal processing to the imaging signal, including white balance correction, gain correction, gamma correction, and format conversion to a video signal. This signal processing varies depending on the conditions, such as the type of the monitor and a use environment of the imaging device (brightness and a wavelength of illumination light, for example) . Therefore, in the endoscope system using the CMOS image sensor, the external device needs to provide the imaging device with control data for an intended type of the signal processing (see, for example, Japanese Patent Laid-open Publications No. 2002-185853 and No. 2002-185873).

The endoscope systems, disclosed in these publications, use a single signal line to transmit (serially) the control data from the external device to the imaging device, and effectively reduce the number of signal lines. The imaging device in both systems is configured to detect the control data based on an internal clock signal generated by a clock generator, so that the control data can be detected bit-by-bit in chronological order.

In the electronic communication systems, such as the disclosed endoscope systems whose electronic device (imaging device) detects the externally-transmitted control data based on the internal clock signal, the frequency of the internal clock signal may deviate from the transmission frequency of the control data when the control data is transmitted at a high frequency (more than 1G Hz, for example) . The deviation on the clock signals leads to misdetection of the control data.

This problem can be prevented by introducing a signal line for clock signal transmission (clock line) between the external device on the sending end and the electronic device on the receiving end, and controlling the external device to transmit a clock signal synchronized with the control data by a high-speed transmission technique, and then controlling the imaging device to detect the control data based on the transmitted clock signal.

Even with the high-speed transmission technique, however, transmission of the control data may become unstable due to timing skew between the data line and the clock line (or phase shift between the data signal and the clock signal) which is caused by the differences in parasitic capacitance and interconnection resistance between the signal lines, especially in the electronic communication system such as the endoscope system that uses a long signal line to transmit a signal between two distant devices. The unstable transmission of the control data may finally lead the device on the receiving end to false detection of the data.

### SUMMARY OF THE INVENTION

In view of the foregoing, it is an object of the present invention to provide an electronic communication system and an endoscope system for high-speed and stable serial transmission of control data between an external device and an electronic device.

In order to achieve the above and other objects, an electronic communication system according to the present invention includes an electronic device and an external device interconnected with a signal line. The external device includes a reference clock generating circuit for generating a reference clock signal, a data generating circuit for generating electronic data, and a signal superimposing circuit. The signal superimposing circuit generates an external clock signal by superimposing the electronic data on the reference clock signal, and transmits this external clock signal serially to the electronic device through the signal line. The electronic device includes an internal clock generating circuit and a data extracting circuit. The internal clock generating circuit generates an internal clock signal which is synchronized with a frequency of the external clock signal serially transmitted from the external device. The data extracting circuit extracts the electronic data from the external clock signal based on the internal clock signal.

It is preferred to provide the external device with an encoder to increases the number of bits of the electronic data and then to encode this electronic data so as to prevent the same signal level from continuing for more than a predetermined bit length.

It is also preferred that the signal superimposing circuit transmits only the reference clock signal as the external clock signal to the electronic device when no electronic data is generated from the data generating circuit.

The electronic data is preferably control data used for controlling the electronic device.

An endoscope system according to the present invention includes an endoscope and a processor unit interconnected with a signal line. The endoscope incorporates an imaging device having a solid-state imaging element. This imaging device is configured to control imaging operation of the solid-state imaging element, based on data transmitted from the processor unit through the signal line, and to apply signal processing to an imaging signal generated from the solid-state imaging element. The processor unit includes a reference clock generating circuit for generating a reference clock signal, a data generating circuit for generating electronic data, and a signal superimposing circuit. The signal superimposing circuit generates an external clock signal by superimposing the electronic data on the reference clock signal, and transmits this external clock signal serially to the imaging device through the signal line. The imaging device further includes an internal clock generating circuit and a data extracting circuit. The internal clock generating circuit generates an internal clock signal which is synchronized with a frequency of the external clock signal serially transmitted from the processor unit. The data extracting circuit extracts the electronic data from the external clock signal based on the internal clock signal.

In a preferred embodiment of the present invention, the solid-state imaging element is a CMOS image sensor.

According to the present invention, the external device superimposes the data on the internally-generated reference clock signal to produce the external clock signal, which is then transmitted to the electronic device through the signal line. There occurs no timing skew between the transmitted clock signal and data, and the data can be transmitted stably at high-speed. By transmitting the clock signal and the data on a single signal line, this electronic communication system also reduces the number of signal lines.

The endoscope system according to the present invention uses a single signal line for serial transmission of the clock signal and the data, and effectively reduces the diameter of the cable containing the signal lines and thus the diameter of the insertion section of the electronic endoscope. This dimensional change can reduce stress in patients undergoing endoscopy.

### BRIEF DESCRIPTION OF THE DRAWINGS

The above objects and advantages of the present invention will become more apparent from the following detailed description when read in connection with the accompanying drawings, in which:
FIG. 1 is a schematic perspective view of an endoscope system according to the present invention;
FIG. 2 is a front view of a distal end portion of an electronic endoscope;
FIG. 3 is a cross-sectional view of the distal end portion taken along an axial direction thereof;
FIG. 4 is a circuit diagram of a solid-state imaging element;
FIG. 5 is a block diagram of an imaging chip and a processor unit;
FIG. 6 is a timing chart of a signal superimposing circuit;
FIG. 7 is a timing chart of a D-type flip flop;
FIG. 8 is a timing chart of a signal superimposing circuit according to another embodiment of the present invention; and

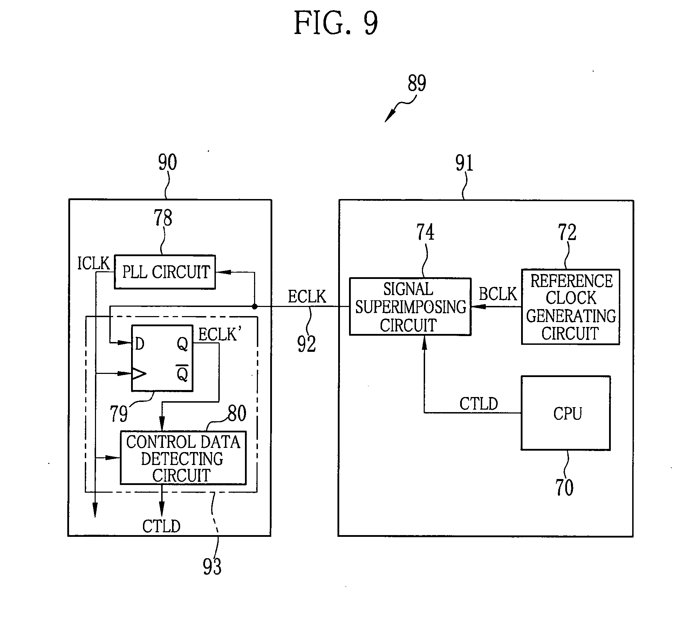

FIG. 9 is a block diagram of an electronic communication system according to the present invention.

### DETAILED DESCRIPTION OF THE PREFERRED EMBODIMENTS

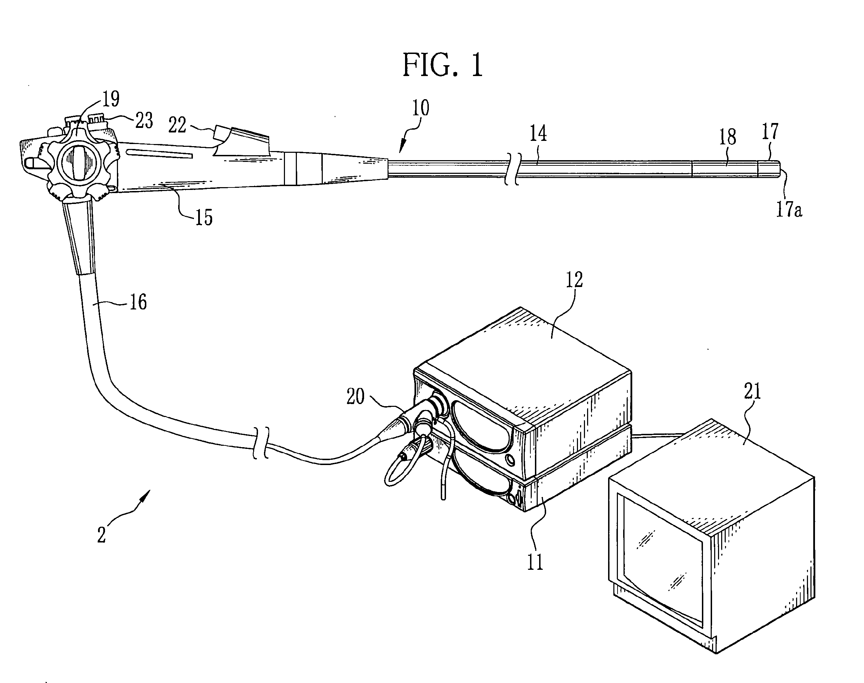

Referring to FIG. 1, an endoscope system 2 includes an electronic endoscope 10, a processor unit 11 and a light source unit 12. The electronic endoscope 10 has a flexible insertion section 14 to be inserted into a body cavity, an operating section 15 connected to a base end of the insertion section 14, and a universal cord 16 to be coupled to the processor unit 11 and the light source unit 12.

The insertion section 14 has a distal end portion 17 that incorporates an imaging chip (imaging device) 42 and an illuminator for image capturing operation inside the body cavity. The distal end portion 17 is connected to a curving portion 18 composed of a plurality of joint pieces. The curving portion 18 turns in left, right, up or down when an angle knob 19 of the operating section 15 is rotated for pushing or pulling wires that extend in the insertion section 14. This curving action faces the distal end portion 17 to a target body part in the body cavity.

The universal cord 16 is coupled to a connecter 20. The connector 20 is a hybrid multi-connector that connects to both the processor unit 11 and the light source unit 12.

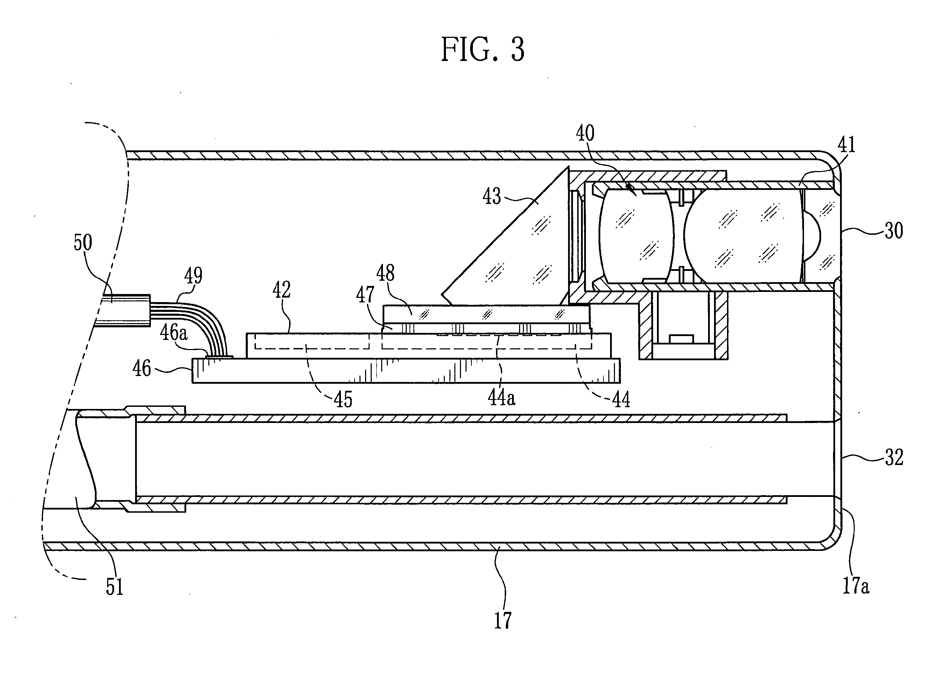

The processor unit 11 supplies power to the electronic endoscope 10 through a cable 50 (see, FIG. 3) extending in the universal cord 16, and controls the imaging chip 42. The processor unit 11 also receives an image signal from the imaging chip 42 through the cable 50, and displays an endoscope image on a monitor 21 based on the received image signal. Electrically connected to the light source unit 12 through the connector 20, the processor unit 11 controls an overall operation of the endoscope system 2.

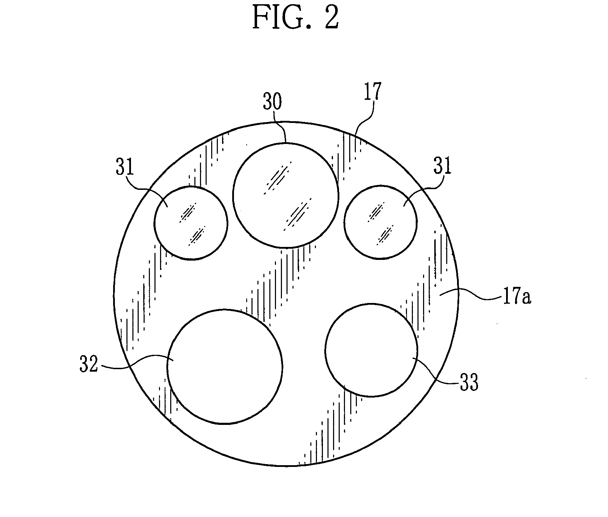

As shown in FIG. 2, a front face 17a of the distal end portion 17 is provided with an observation window 30, two illumination windows 31, a forceps outlet port 32 and an air/water nozzle 33. The observation window 30 is located at substantially the center of the front face 17a with respect to the lateral direction, and is shifted to the upper side with respect to the vertical direction. The illumination windows 31 are arranged symmetrical to the observation window 30, and irradiate illumination light from the light source unit 12 onto the target body part. The forceps outlet port 32 is coupled to a forceps inlet port 22 (see, FIG. 1) of the operating section 15 with a forceps channel 51 (see, FIG. 3) provided in the insertion section 14. A treatment tool, such as a syringe or a high-frequency knife is inserted from the forceps inlet port 22 and exposed from the forceps outlet port 32 to the target body part. The air/water nozzle 33 discharges cleaning water or air supplied from an air/water feeder in the light source unit 12 toward the observation window 30 or the target body part, in response to pressing of an air/water feed button 23 (see, FIG. 1) of the operating section 15.

As shown in FIG. 3, disposed behind the observation window 30 is a lens barrel 41 holding an objective optical system 40 to take in the image light of the target body part. The lens barrel 41 is arranged such that an optical axis of the objective optical system 40 becomes parallel to an axis of the insertion section 14. The lens barrel 41 is connected at the rear end to a prism 43 which bends the image light, transmitted through the objective optical system 40, at an approximately right angle to an imaging chip 42.

The imaging chip 42 is a monolithic semiconductor (so-called a CMOS sensor chip) integrating a CMOS image sensor 44 with a peripheral circuit 45 for control of the solid-state imaging element 44 and image processing (into SoC), and mounted on a support substrate 46. The solid-state imaging element 44 is arranged to face its imaging surface 44a to a light exit surface of the prism 43. On the imaging surface 44a, a rectangular plate-shaped cover glass 48 is attached through a spacer 47 of rectangular plate shape. The imaging chip 42 and the spacer 47, and the spacer 47 and the cover glass 48 are joined with an adhesive agent, so that the imaging surface 44a is protected from dust.

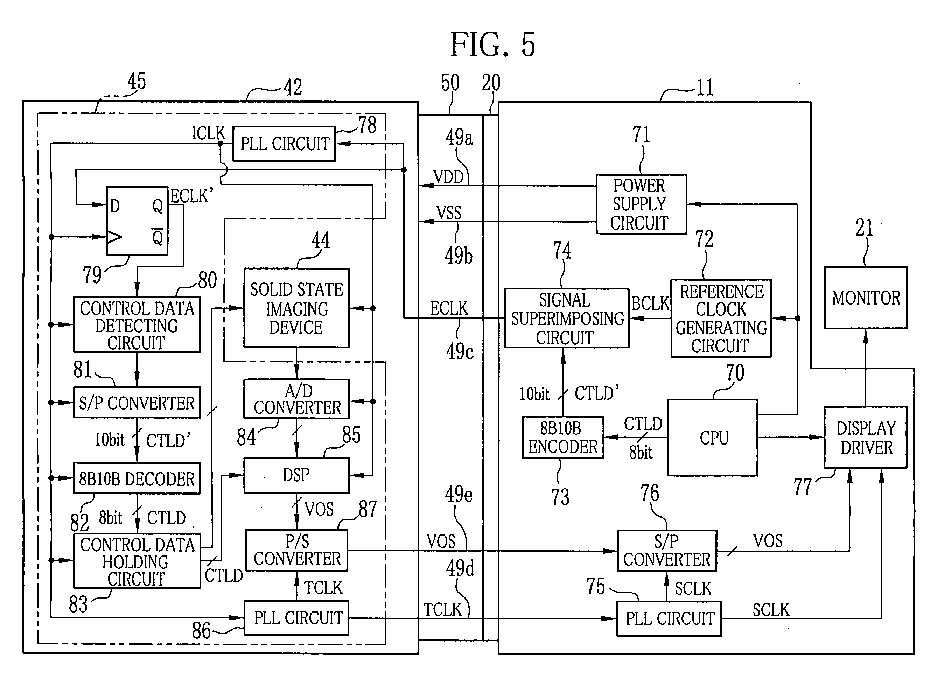

At a rear end portion of the support substrate 46 extending toward the base end of the insertion section 14, a plurality of input-output terminals 46a are arranged along the width direction of the support substrate 46. The input-output terminals 46a are connected to signal lines 49 (signal lines 49a-49e in FIG. 5) which extend in the universal cord 16. A variety of signals are transmitted to and from the processor unit 11 by way of these signal lines 49. The input-output terminals 46a are electrically connected to the peripheral circuit 45 of the imaging chip 42 through wiring and bonding pads (both not shown) formed in the support substrate 46. The signal lines 49 are tied together and inserted into a flexible tubular cable 50. This cable 50 extends through the insertion section 14, the operating section 15 and the universal cord 16, and is connected to the connector 20.

An illumination section (not shown) is provided behind the illumination window 31. The illumination section includes a light exit end of a light guide that transmits illumination light from the light source unit 12. Likewise the cable 50, the light guide extends through the insertion section 14, the operating section 15 and the universal cord 16, and is connected to the connector 20.

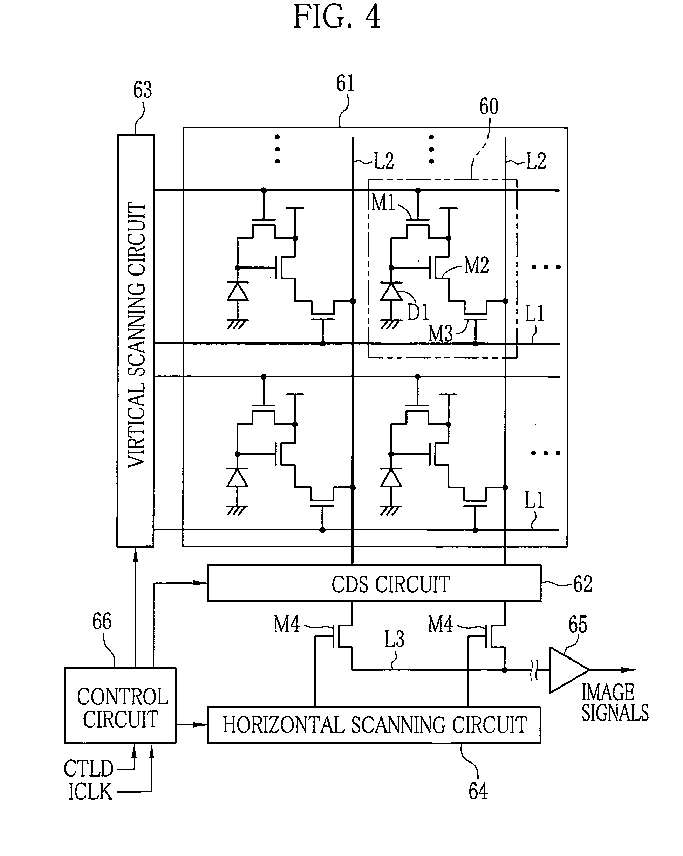

As shown in FIG. 4, the solid-state imaging element 44 includes a pixel section 61, a correlation double sampling (CDS) circuit 62, a vertical scanning circuit 63, a horizontal scanning circuit 64, an output circuit 65 and a control circuit 66. The pixel section 61 has a plurality of unit pixels 60 in a matrix arrangement. The CDS circuit 62 processes (performs a noise reduction process to) output signals (pixel data) from the pixel section 61. The vertical scanning circuit 63 controls scanning operation in the vertical direction and a resetting operation of the pixel section 61. The horizontal scanning circuit 64 controls scanning operation in the horizontal direction of the pixel section 61. The output circuit 65 transmits the pixel data. The control circuit 66 provides control signals to the circuits 62-64, and controls timing for vertical scanning, horizontal scanning and sampling.

The unit pixel 60 is composed of a photodiode D1, a reset transistor M1 a drive (amplifier) transistor M2 and a pixel selection transistor M3. Each unit pixel 60 is connected to a vertical scanning (row selection) line L1 and a horizontal scanning (column signal) line L2, and scanned sequentially by the vertical scanning circuit 63 and the horizontal scanning circuit 64.

The control circuit 66 produces three types of control signals, one to be input to the vertical scanning circuit 63 and the horizontal scanning circuit 64 for scanning columns and rows of the pixel section 61, another one to be input to the vertical scanning circuit 63 for resetting a signal charge accumulated in each photodiode D1, and the other one to be input to the CDS circuit 62 for controlling a connection between the pixel section 61 and the CDS circuit 62.

The CDS circuit 62 is segmented by each column signal line L2. In accordance with horizontal scanning signals produced by the horizontal scanning circuit 64, the CDS circuit 62 sequentially outputs the pixel data of the unit pixels 60 connected to the row selection line L1 selected by the vertical scanning circuit 63. The horizontal scanning circuit 64 produces the horizontal scanning signals to control switching (ON and OFF) of the column selection transistors M4 provided between the CDS circuit 62 and an output bus line L3 connected to the output circuit 65. The output circuit 65 amplifies and delivers the pixel data which is sequentially transmitted from the CDS circuit 62 to the output bus line L3. Hereinafter, this series of pixel data out of the output circuit 65 is collectively referred to as an image signal.

Although not shown in detail, the solid-state imaging element 44 is a single-plate color solid-state imaging element equipped with a color filter having plural color segments, such as a primary color mosaic filter with Bayer pattern.

As shown in FIG. 5, the processor unit 11 includes a CPU (data generating circuit) 70, a power supply circuit 71, a reference clock generating circuit 72, an 8B10B encoder 73, a signal superimposing circuit 74, a PLL (phase locked loop) circuit 75, a serial-to-parallel (S/P) converter 76 and a display driver 77.

The CPU 70 controls each component of the processor unit 11. Also, the CPU 70 generates control data CTLD composed of, for example, 8-bit parallel signals, which is entered through the 8B10B encoder 73 into the signal superimposing circuit 74 so as to control the operation of the imaging chip 42.

The power supply circuit 71 supplies a power supply voltage VDD and a ground voltage VSS to each component of the processor unit 11, and also to each component of the imaging chip 42 by way of the signal lines 49a, 49b. The reference clock generating circuit 72 generates a frequency-stable reference clock signal BCLK, and enters this signal in the signal superimposing circuit 74.

The 8B10B encoder 73 converts the 8-bit control data CTLD into 10-bit control data CTLD' by adding 2-bit redundant data to the 8-bit control data CTLD entered from the CPU 70. The 8-bit to 10-bit conversion is performed according to a standardized conversion table. This conversion is necessary for preventing the data serially transmitted through the signal line 49c from staying at the same signal level ("0" or "1") for a certain period, and the 8-bit control data CTLD of, for example, "00001111" is converted into the 10-bit control data CTLD' of "0101110100".

The signal superimposing circuit 74 generates an external clock signal ECLK by superimposing the control data CTLD' entered from the 8B10B encoder 73 on the reference clock signal BCLK entered from the reference clock generating circuit 72. The external clock signal ECLK is serially transmitted to the imaging chip 42 bay way of the signal line 49c.

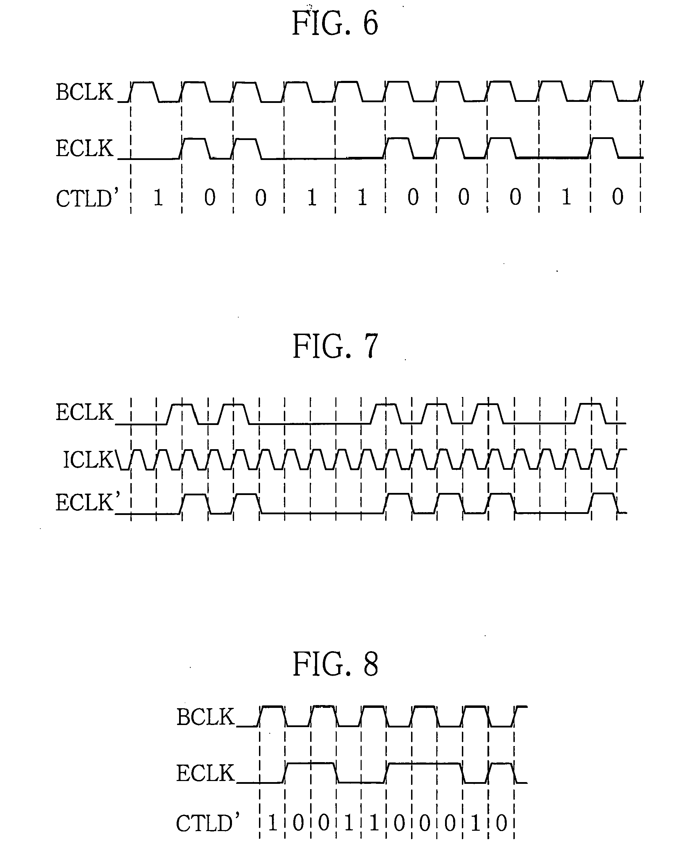

More specifically, as shown in FIG. 6, the signal superimposing circuit 74 detects each rising edge of the reference clock signal BCLK, and changes the signal to keep a "Low" level for one complete cycle (from a rising edge to the next rising edge) where the control data CTLD' is "1" so as to generate the external clock signal ECLK having the control data CTLD' superimposed thereon. In the exemplary case shown in FIG. 6, the control data CTLD' converted by the 8B10B encoder 73 is "1001100010". This control data CTLD' is expressed by a negative logic, where "1" corresponds to the "Low" level and "0" corresponds to the "High" level.

In the event that the imaging chip 42 has already started the imaging operation, or in such an event that no control is needed for the imaging chip 42, the CPU 70 generates the control data CTLD of all zeros "00000000" (when the negative logic is used). Receiving the control data CTLD of all zeros, the 8B10B encoder 73 converts it into the control data CTLD" of all zeros "0000000000". In this case, the signal superimposing circuit 74 transmits the reference clock signal BCLK to the imaging chip 42 directly as the external clock signal ECLK, instead of executing the aforesaid signal superimposing process. Alternatively, it may also be possible in this case to stop transmitting the signal from the signal superimposing circuit 74 to the imaging chip 42.

The PLL circuit 75 includes a phase comparator, a loop filter, a voltage-controlled transmitter and a frequency divider. The PLL circuit 75 receives a serial transmission clock signal TCLK from the imaging chip 42 through the signal line 49d, and generates a clock signal SCLK of the same frequency as an internal clock signal ICLK of the imaging chip 42 by multiplying (by, for example, one-tenth times) the frequency of the serial transmission clock signal TCLK. This clock signal SCLK is supplied to the S/P converter 76 and the display driver 77.

The S/P converter 76 receives video signals VOS which are serially transmitted from the imaging chip 42 by way of the signal line 49e. Based on the clock signal SCLK supplied from the PLL circuit 75, the S/P converter 76 converts the video signals VOS into parallel signals sequentially, and enters them in the display driver 77. Based on the clock signal SCLK, the display driver 77 displays the video signals VOS as images on the monitor 21.

The peripheral circuit 45 of the imaging chip 42 includes a PLL circuit 78, a D-type flip flop 79, a control data detecting circuit 80, an S/P converter 81, an 8B10B decoder 82, a control data holding circuit 83, an analog-to-digital (D/A) converter 84, a digital signal processing circuit (DSP) 85, another PLL circuit 86 and a parallel-to-serial (P/S) converter 87. In this embodiment, the D-type flip flop 79, the control data detecting circuit 80, the S/P converter 81 and the 8B10B decoder 82 constitute a control data extracting circuit.

The PLL circuit 78, structurally identical to the PLL circuit 75, detects the phase of the external clock signal ECLK entered from the signal superimposing circuit 74 through the signal line 49c, and generates the internal clock signal ICLK by multiplying (by, for example, two times) the external clock signal ECLK. The internal clock signal ICLK is supplied to each component of the peripheral circuit 45 and the control circuit 66 (see, FIG. 4) of the solid-state imaging element 44.

The external clock ECLK is delivered to a data input terminal D of the D-type flip flop 79, while the internal clock ICLK is delivered to a clock input terminal of the D-type flip flop 79. As shown in FIG. 7, the D-type flip flop 79 samples and holds the external clock signal ECLK applied to the data input terminal D at the rising edge of the internal clock signal ICLK so as to reproduce the external clock signal ECLK' as retiming data which is phase coherent to the internal clock signal ICLK. This retimed external clock signal ECLK' is transmitted from a data output terminal Q to the control data detecting circuit 80. It is to be noted that the PLL circuit 78 and the D-type flip flop 79 constitute a so-called clock and data recovery (CDR) circuit.

The control data detecting circuit 80 monitors the transition (rising edges and/or falling edges) of the external clock signal ECLK' out of the D-type flip flop 79 based on the internal clock signal ICLK, and determines whether or not the external clock signal ECLK' is periodic. Based on this determination, the control data detecting circuit 80 detects the control data CTLD' superimposed on the external clock signal ECLK' , and enters only the portions thereof containing the control data CTLD' into the S/P converter 81. More specifically, when detecting an aperiodic waveform such as the external clock signal ECLK shown in FIG. 6, the control data detecting circuit 80 enters only the aperiodic portions of the waveform into the S/P converter 81. In contrast, when detecting a periodic waveform such as the reference clock signal BCLK shown in FIG. 6, the control data detecting circuit 80 discards the periodic portions of the waveform without entering them into the S/P converter 81.

The S/P converter 81 converts the external clock signal ECLK', partially transmitted from the control data detecting circuit 80, into parallel signals based on the internal clock signal ICLK. This process restores the 10-bit control data CLTD' which is generated by the 8B10B encoder 73 of the processor unit 11. The restored control data CTLD' is entered into the 8B10B decoder 82.

The 8B10B decoder 82 performs the inverse process to the 8B10B encoder 73 using a standardized coding table for 8B10B, and decodes the original 8-bit data from the 10-bit control data CTLD'. The decoded 8-bit control data CTLD is entered into the control data holding circuit 83.

Composed of a register circuit for temporarily holding the data, the control data holding circuit 83 holds the control data CTLD, and enters it into the control circuit 66 or the DSP 85 of the solid-state imaging element 44 depending on the type of the control data CTLD. The control data CTLD to be entered into the control circuit 66 includes a scan condition, such as a pixel scan mode (progressive scan/ interlace scan), a pixel region to be scanned (sites of the unit pixels 60 at a scan start position and a scan end position), and a shutter speed (exposure time). The control data CTLD to be entered into the DSP 85, on the other hand, includes a signal processing condition, such as necessity of white balance correction, gain correction, color interpolation, edge enhancement, gamma correction and format conversion into a video signal, coefficients for the white balance correction and the gain correction, and a format for signal conversion. The control circuit 66 of the solid-state imaging element 44 performs the imaging operation based on the control data CTLD received from the control data holding circuit 83 and the internal clock signal ICLK.

The A/D converter 84 quantizes each analog pixel data in the image signal generated by the solid-state imaging element 44, and converts it into a digital signal of, for example, 8 bits (256 colors). The digitized image signal is entered into the DSP 85. The DSP 85 has an ability of white balance correction, gain correction, color interpolation, edge enhancement, gamma correction and format conversion into a video signal, and executes the process indicated by the control data CTLD under the specified condition so as to produce the video signal VOS.

The PLL circuit 86, having the same configuration as the PLL circuit 75, multiplies (by, for example, one-tenth times) the frequency of the internal clock signal ICLK, and generates the serial transmission clock signal TCLK. This serial transmission clock signal TCLK is supplied to the P/S converter 87 and the PLL circuit 75 of the processor unit 11 by way of the signal line 49d.

The P/S converter 87 converts the video signal VOS from the DSP 85 into a serial signal in accordance with the serial transmission clock signal TCLK generated by the PLL circuit 86, and transmits the serial signal to the S/P converter 76 of the processor unit 11 through the signal line 49e.

Next, the operation of the endoscope system 2 is described. To observe an internal body site, the power is turned on to the electronic endoscope 10, the processor unit 11, the light source unit 12 and the monitor 21, and the insertion section 14 of the electronic endoscope 10 is inserted into a body cavity. Under the illumination light from the light source unit 12, the image of the target body part is captured with the imaging chip 42 incorporated in the distal end portion 17 of the insertion section 14, and displayed on the monitor 21.

For operation of the imaging chip 42, the CPU 70 of the processor unit 11 generates the control data CTLD. The control data CTLD varies according to the types of the monitor 21 and the light source unit 12 (brightness and wavelength of the illumination light), and specifies the drive condition (a pixel scan mode, a pixel region to scan, a shutter speed) of the solid-state imaging element 44 and the signal processing condition (necessity of various processing, coefficients for the white balance correction and the gain correction, a format for video signal conversion) for the DSP 85.

Out of the CPU 70, the control data CTLD is converted into a 10-bit parallel signal by the 8B10B encoder 73, and entered as the control data CTLD' into the signal superimposing circuit 74. The signal superimposing circuit 74 superimposes this control data CTLD' onto the reference clock signal BLCK entered from the reference clock generating circuit 72, and produces the external clock signal ECLK. The external clock signal ECLK is transmitted to the imaging chip 42 by way of the signal line 49c. In the event that no control data CDTL' is entered (namely, the control data CDTL' has all zeros), the signal superimposing circuit 74 transmits the reference clock signal BCLK to the imaging chip 42 directly as the external clock signal ECLK.

This serially-transmitted external clock signal ECLK is received by the PLL circuit 78 and the D-type flip flop 79 in the peripheral circuit 45 of the imaging chip 42. In response, the PLL circuit 78 generates the internal clock signal ICLK, and the D-type flip flop 79 generates the external clock signal ECLK' which is phase coherent to the internal clock signal ICLK. The control data detecting circuit 80 detects the periods containing the control data CTLD' from the external clock signal ECLK', and extracts only the signals (wavelength portions) of the detected periods.

The partial waveforms of the external clock signal ECLK' thus extracted by the control data detecting circuit 80 are restored to the original, 8-bit control data CTLD by the S/P converter 81 and the 8B10B decoder 82. The restored control data CTLD is held in the control data holding circuit 83, and transmitted to the control circuit 66 or the DSP 85 of the solid-state imaging element 44 according to the type of the data. The imaging operation of the solid-state imaging element 44, the A/D conversion of the A/D converter 84 and the signal processing of the DSP 85 are controlled on the basis of the control data CTLD, and the video signal VOS is produced.

The video signal VOS produced in the DSP 85 is converted by the P/S converter 87 to a serial signal, and serially transmitted to the processor unit 11 in synchronize with the serial transmission clock signal TCLK generated by the PLL circuit 86. In the processor unit 11, the video signal VOS is converted by the S/P converter 76 to a parallel signal, which is transmitted to the display driver 77 and displayed as an image on the monitor 21.

As described, the reference clock signal BCLK and the control data CTLD' are superimposed and transmitted on the single signal line 49c in the endoscope system 2. This eliminates timing skew between a data signal and a clock signal to be transmitted, and enables high-speed and stable transmission of data.

Additionally, since the endoscope system 2 uses the single signal line 49c to transmit the reference clock signal BCLK and the control data CTLD', it is possible to reduce the diameter of the cable 50 and thus the diameter of the insertion section 14. Therefore, the physical stress of the patients can be reduced during endoscopy.

In the endoscope system 2, the control data CTLD is firstly converted by the 8B10B encoder 73 to the control data CTLD' where the same value does not continue for more than a predetermined period, and superimposed on the reference clock signal BCLK and then transmitted serially. This allows the PLL circuit 78 of the imaging chip 42 on the receiving end to frequently detect the transition (rising edges) of the signal, and enables generating the internal clock signal tightly synchronized with the frequency of the reference clock signal BCLK all the time.

Although the CPU 70 in the above embodiment enters the control data CTLD' of all zeros from the 8B10B encoder 73 into the signal superimposing circuit 74, so as to stop the signal superimposing process of the signal superimposing circuit 74 when there is no need to control the imaging chip 42, it may also be possible to control the signal superimposing circuit 74 directly from the CPU 70.

Additionally, it may be possible to add a check sum to the control data CTLD' and superimpose it on the reference clock signal BCLK to produce the external clock signal ECLK. The check sum is the value that adds up the asserted values of the data in each block of the control data CTLD' divided by predetermined bits. When using the check sum, the imaging chip 42 needs to have detection circuit which performs the same operation to calculate the check sum of the control data CTLD' extracted from the external clock signal ECLK, and judges if the result matches the originally transmitted check sum. This configuration allows detecting the data loss in the transmission path.

In the above embodiment which uses the negative logic to express the control data CTLD', the signal superimposing circuit 74 detects the rising edges of the reference clock signal BCLK, and generates the external clock signal ECLK which, as shown in FIG. 6, keeps the "Low" level for one complete cycle corresponding to "1" of the control data CTLD'. The control data CTLD' may, however, be expressed by a positive logic. It is preferred in this case to keep the "Low" level for "0" of the control data CTLD'. Additionally, the signal superimposing circuit 74 may be configured to detect the falling edges of the reference clock signal BCLK. Further, the external clock signal may keep a "high" level for one complete cycle (from a falling edge to the next falling edge) where the control data CTLD' is "1" or "0".

In the above embodiment, the signal superimposing circuit 74 converts the signal by using one bit of the control data CTLD' for one cycle of the reference clock signal BCLK. However, in the case of detecting both of the rising and falling edges, it may be possible to convert the signal using one bit of the control data CTLD' for a half cycle of the reference clock signal BCLK as shown in FIG. 8. This allows double data rate transfer which doubles the data transmission rate.

Although the control data CTLD restored in the imaging chip 42 is transmitted to the control circuit 66 in the solid-state imaging element 44 and the DSP 85 in the above embodiment, this restored control data CTLD may be entered back into the processor unit 11 together with the video signal VOS through the signal line 49e. In this case, it is preferred to superimpose the control data CTLD on the blanking intervals (vertical or horizontal blanking intervals) of the video signal VOS. This configuration allows the processor unit 11 to verify whether the control data CTLD is entered into the imaging chip 42.

Although the above embodiment is directed to the endoscope system as an electronic communication system, the present invention is applicable to imaging systems such as an ultrasonic endoscope for capturing an image with an ultrasonic transducer, a digital camera composed of a main body and a detachable lens barrel having an imaging function, and a web camera system composed of a camera and a personal computer, and also to electronic communication systems having no imaging function.

Namely, the present invention is applicable to an electronic communication system 89 in which, as shown in FIG. 8, an electronic device 90 and an external control device 91 are interconnected with a signal line 92. The external control device 91, configured to control the electronic device 90, includes the CPU (data generating circuit) 70 for generating the control data CTLD, the reference clock generating circuit 72 for generating the reference clock signal BCLK, and the signal superimposing circuit 74. This signal superimposing circuit 74 superimposes the control data CTLD on the reference clock signal BCLK to produce the external clock signal ECLK, which is then transmitted serially through the signal line 92 to the electronic device 90. The electronic device 90 includes the PLL circuit 78 and a control data extracting circuit 93. The PLL circuit 78 generates the internal clock signal ICLK which is synchronized with the frequency of the external clock signal ECLK transmitted through the signal line 92. Based on the internal clock signal ICLK, the control data extracting circuit 93 extracts the control data CTLD from the external clock signal ECLK. While the control data extracting circuit 93 in this embodiment only includes the D-type flip flop 79 and the control data detecting circuit 80, this configuration may be changed as needed.

Although the aforesaid embodiments are directed to transmission of the control data, the present invention is also effective to transmit other types of data (such as status data indicating operating condition).

Although the present invention has been fully described by the way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. An electronic communication system (2, 89) in which an electronic device (42, 90) and an external device (11, 91) are connected to each other with a signal line (49, 92), **characterized in** comprising:
(A) said external device (11, 91) comprising:
a reference clock generating circuit (72) for generating a reference clock signal;
a data generating circuit (70) for generating electronic data; and
a signal superimposing circuit (74) for generating an external clock signal composed of said reference clock signal and said electronic data superimposed thereon, and for serially transmitting said external clock signal to said electronic device through said signal line (49, 92);
(B) said electronic device (42, 90) comprising:
an internal clock generating circuit (78) for generating an internal clock signal which is synchronized with a frequency of said external clock signal serially transmitted from said external device (11, 91); and
a data extracting circuit (79, 80, 81, 82) for extracting said electronic data from said external clock signal based on said internal clock signal.

2. The electronic communication system of claim 1, wherein said external device (11) further includes an encoder (73) which increases the number of bits of said electronic data and encodes said electronic data so as to prevent the same signal level from continuing for more than a predetermined bit length.

3. The electronic communication system of claim 1, wherein said signal superimposing circuit (74) transmits said reference clock signal directly as said external clock signal to said electronic device (42, 90) when no electronic data is generated from said data generating circuit (70).

4. The electronic communication system of claim 1, wherein said electronic data comprises control data for controlling said electronic device (42, 90).

5. An endoscope system (2) in which an endoscope (10) incorporating an imaging device (42) including a solid-state imaging element (44) and a processor unit (11) for controlling said solid-state imaging element (44) are connected to each other with a signal line (49), said imaging device (42) being configured to control imaging operation of said solid-state imaging element (44) based on data transmitted from said processor unit (11) through said signal line (49), and to apply signal processing to an imaging signal generated from said solid-state imaging element (44), said endoscope system (2) **characterized in** comprising:
(A) said processor unit (11) comprising:
a reference clock generating circuit (72) for generating a reference clock signal;
a data generating circuit (70) for generating electronic data; and
a signal superimposing circuit (74) for generating an external clock signal composed of said reference clock signal and said electronic data superimposed thereon, and for serially transmitting said external clock signal to said imaging device (42) through said signal line (49);
(B) said imaging device (42) comprising:
an internal clock generating circuit (78) for generating an internal clock signal which is synchronized with a frequency of said external clock signal serially transmitted from said processor unit (11); and
a data extracting circuit (79, 80, 81, 82) for extracting said electronic data from said external clock signal based on said internal clock signal.

6. The endoscope system of claim 5, wherein said solid-state imaging element (44) comprises a CMOS image sensor.
